# EUROPÄISCHE PATENTANMELDUNG

(11) **EP 2 762 260 A1**
(43) Veröffentlichungstag der Anmeldung: **06.08.2014**
(21) Anmeldenummer: 13153580.9
(22) Anmeldetag: 01.02.2013
(51) Int. Cl.: B23K 26/03, B23P 6/04, B23K 31/12

(54) **Kamera-basiertes Monitoring der Rissschließung beim Umschmelzen und Vorrichtung dafür**

(71) Anmelder: Siemens Aktiengesellschaft, 80333 München (DE)
(72) Erfinder: Burbaum, Bernd, 14612 Falkensee (DE); Melzer-Jokisch, Torsten, 15366 Neuenhagen bei Berlin (DE)

(57) **Zusammenfassung**

Durch die Verwendung einer vorlaufenden und nachlaufenden Kamera (10',10'') kann direkt ermittelt werden, ob vorhandene Risse durch das Umschmelzen von Rissen wieder vollständig verschlossen sind.

## Beschreibung

Die Erfindung betrifft ein Verfahren zur Überwachung der Rissschließung beim Umschmelzen von Rissen und eine Vorrichtung dafür.

Servicebeanspruchte Bauteile oder neu gegossene Bauteile können manchmal einen Riss oder Risse aufweisen, die verschlossen werden müssen, um das Bauteil erneut oder erstmalig einsetzen zu können. Dabei werden Schweißverfahren oder Laserschweißverfahren verwendet, um das Material um den Riss herum aufzuschmelzen und dadurch den Riss zu schließen. Risse können unterschiedliche Geometrien aufweisen, so dass bestimmte Risse mit einem Schweißparametersatz nicht vollständig geschlossen werden.

Es ist daher Aufgabe der Erfindung, dieses Problem zu lösen.

Die Aufgabe wird gelöst durch ein Verfahren gemäß Anspruch 1 und eine Vorrichtung gemäß Anspruch 3

In den Unteransprüchen sind weitere vorteilhafte Maßnahmen aufgelistet, die beliebig miteinander kombiniert werden können, um weitere Vorteile zu erzielen.

Der Vorteil liegt in der Verkleinerung der Ausschusszahlen beim Umschmelzen, da rechtzeitig erkannt wird, dass ein Riss vorliegt. Das in der Vorrichtung noch vorhandene Bauteil kann direkt überarbeitet werden, ohne es zusätzlich aus- und wieder einzubauen.

Es zeigen:
- Figur 1, 2: verschiedene Abläufe beim Umschmelzen,
- Figur 3: eine Vorrichtung zum Umschmelzen
- Figur 4: eine Liste von Superlegierungen.

Die Figuren und die Beschreibung stellen nur Ausführungsbeispiele der Erfindung dar

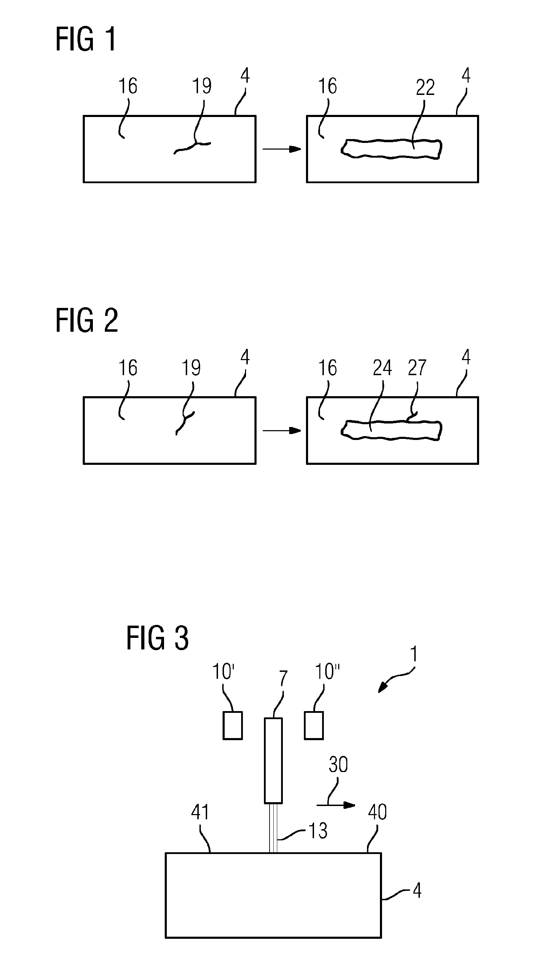

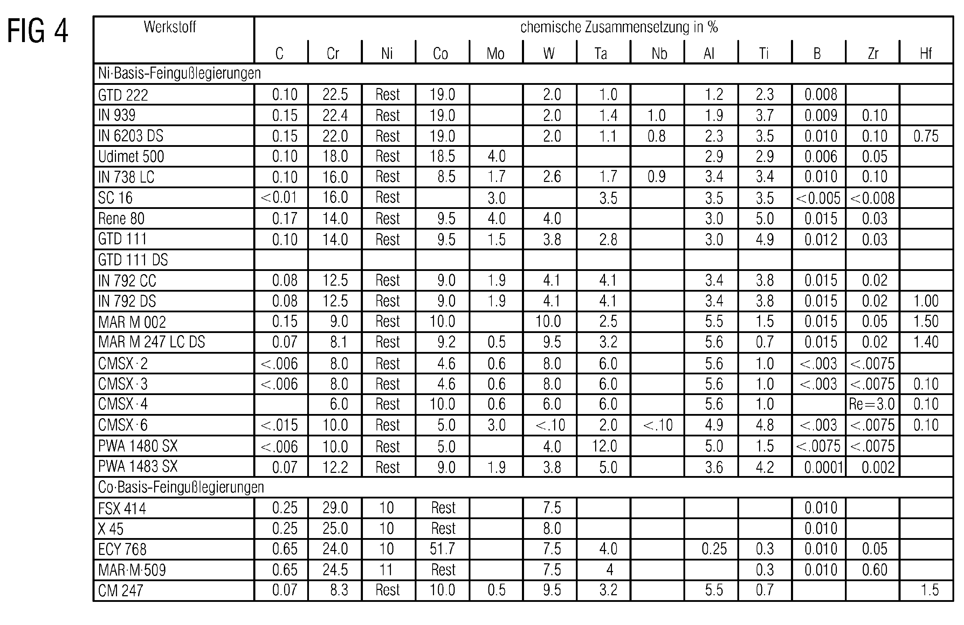

Figur 1 zeigt ein Substrat 4 eines Bauteils 1 mit einer Oberfläche 16, bei dem ein Riss 19 erkennbar vorhanden ist.
Das Substrat 4 ist vorzugsweise kobalt- oder nickelbasiert und ganz vorzugsweise eine Legierung aus Figur 4.

Dieser Riss 19 soll durch ein Schweißverfahren umgeschmolzen werden.
Dies kann mittels bekannter Schweißvorrichtungen, insbesondere mittels Laserstrahlen erfolgen.
Zum Umschmelzen wird ein Schweißstrahl 13 (Fig. 3) über den Riss 19 verfahren, so dass ein Umschmelzbereich 22 auf der Oberfläche 16 entsteht.
In Figur 1 ist der Riss 19 vollständig umgeschmolzen bzw. es ist kein neuer Riss entstanden.

Figur 2 zeigt eine ähnliche Ausgangslage, wobei jedoch nach dem Umschmelzen ebenfalls ein Umschmelzbereich 24 entstanden ist, von dem ausgehend noch ein Riss 27 vorhanden ist, der einen Teil des Risses 19 darstellt oder einen Riss darstellt, der durch das Umschmelzen entstanden ist. Auch dieser Riss 27 muss umgeschmolzen werden, damit das Substrat 4 noch mal verwendet werden kann.

Wird dieser Riss 27 erkannt, so kann direkt der Riss 27 repariert werden bzw. es wird erkannt, dass das Substrat 4 fehlerhaft ist und es wird aussortiert.

Figur 3 zeigt eine Vorrichtung 1, mit der ein solcher Riss 27 oder solche Risse 27 direkt erkannt werden.
Das Substrat 4 wird mittels eines Schweißgerätes 7, insbesondere mittels eines Lasers, und Schweiß- oder Laserstrahlen 13, bearbeitet.

Dabei verfährt das Schweißgerät 7 in einer Richtung 30 und weist sowohl in Richtung 30 vor dem Schweißgerät 7 und dahinter jeweils eine einzige Kamera 10', 10" auf. Ebenso ist es möglich eine Kamera zu verwenden, die durch ihren Blickwinkel oder Verkippen der Blickrichtung Bilder vor und hinter dem Schweißgerät 7 aufnimmt.

Die vorlaufende Kamera 10' detektiert den Riss 19 oder Risse 19 und speichert den Verlauf und den Ort des Risses 19 ab. Die nachlaufende Kamera 10" nimmt ebenfalls Bilder auf, speichert den Verlauf und vergleicht diese mit den Bildern der vorlaufenden Kamera 10' und kann durch Kreuzkorrelation feststellen, ob noch ein Riss 27 an dem bereits vorbekannten Ort vorhanden ist und eine entsprechende Meldung ans System weitergeben oder ob kein Riss mehr vorliegt bzw. wo noch Risse 27 oder Rissanteile 27 auch ggf. neu vorhanden sind.

Die Kameras 10', 10" sind optische Kameras, insbesondere CCD oder CMOS Kameras.
Die Kameras 10', 10" dienen nicht zur Temperaturmessung, sind also keine Infrarotkameras.

Dadurch, dass das System weiß, wo ein Riss war und ebenso die Oberflächenstruktur des umgeschmolzenen Bereichs und die Oberflächenstruktur der Oberfläche um den Umschmelzbereich bekannt ist, ist ein einfacher und schneller Vergleich und damit eine einfache und schnelle Erkennung von Rissen 27 möglich.

## Patentansprüche

1. Verfahren
zum Schweißen von Oberflächen (16),
insbesondere zum Umschmelzen von zumindest einem Riss (19), bei dem ein Schweißgerät (7),
insbesondere ein Laserschweißgerät (7),
eine Oberfläche (16) eines Substrats (4) mittels eines Schweißstrahls (13) behandelt,
insbesondere zumindest in den Bereichen der Risse (19) Material umschmilzt,
um den zumindest einen Riss (19) zu schließen
und
bei dem eine erste Kamera (10') Bilder aufnimmt von einem noch umzuschmelzenden Bereich (40) entlang einer Verfahrrichtung (30) des Schweißstrahls (13) und
eine nachlaufende Kamera (10"),
insbesondere hinter dem Schweißgerät (7),
Bilder zumindest von dem schweißungsbehandelten Bereich (41, 22, 24) aufnimmt und
diese mit den Bildern der vorlaufenden Kamera (10') vergleicht und
dadurch eine Statusmeldung erfolgt,
ob noch Risse (27) vorhanden sind.

2. Verfahren nach Anspruch 1,
bei dem bei Vorhandensein von Rissen (27) direkt ein erneutes Umschmelzen diese Risse (27) stattfindet.

3. Vorrichtung (1)
zum Schweißen mit Überwachung der Verschließung von zumindest einem Riss (19) oder Auftreten von zumindest einem Riss (27),
die (1) aufweist:
ein Schweißgerät (7),
insbesondere ein Laser,
das Schweißstrahlen (13),
insbesondere Laserstrahlen aussenden kann,
eine vorlaufende erste Kamera (10'),
die Bilder aufnehmen kann von einem umzuschmelzenden Bereich (40),
eine dem Schweißgerät (7) nachlaufende Kamera (10"),
die Bilder des schweißungsbehandelten Bereichs (22, 24, 41) aufnimmt, und
wobei die Bilder der beiden Kameras (10', 10") miteinander verglichen werden können,
um durch Kreuzkorrelation festzustellen,
ob noch zumindest ein Riss (27) vorhanden sind.

4. Verfahren oder Vorrichtung nach Anspruch 1 oder 3,
bei dem die Kamera (10', 10") optische Kameras (10', 10") darstellen,
insbesondere keine Infrarotkameras darstellen.

5. Verfahren oder Vorrichtung nach einem oder mehreren der Ansprüche 1, 3 oder 4,
welches die Kameras (10', 10") als CMOS oder CCD Kameras darstellt.
